# EUROPEAN PATENT SPECIFICATION

(11) **EP 0 393 631 B1**
(45) Date of publication and mention of the grant of the patent: **30.10.1996**
(21) Application number: 90107361.9
(22) Date of filing: 18.04.1990
(51) Int. Cl.: G06F 11/14, G06F 11/00, G06F 1/30

(54) **Initial process system after cutoff of power source and corresponding process system**
Initialisierungsprozess nach Stromversorgungsausfall und zugehöriges Prozessystem
Processus initial après coupure de la source d'alimentation et système de traitement correspondant

(30) Priority: 20.04.1989 JP 100755/89; 20.04.1989 JP 100756/89; 08.09.1989 JP 233295/89
(43) Date of publication of application: 24.10.1990
(73) Proprietor: SANYO ELECTRIC CO., LTD., Moriguchi-shi, Osaka 570 (JP)
(72) Inventor: Katsuki, Hikaru, Kiryu-shi, Gunma-ken (JP); Hosoya, Masakazu, Ora-gun, Gunma-ken (JP); Shimizu, Masayuki, Ora-gun, Gunma-ken (JP)
(74) Representative: Glawe, Delfs, Moll & Partner

(56) References cited:
- EP-A- 0 213 577
- EP-A- 0 256 815

## Description

The present invention relates in general to an apparatus whose operation is controlled by a system such as a microcomputer including a processor or a microprocessor and a read-only memory (ROM), and more particularly this invention relates to an initial processing system, in the apparatus described above, at the time of automatic restoration of the processor or microprocessor after cutoff of a power source due to service failure, or the like, and to a processing system for data protection in the system described above at the time of cutoff of power source.

A conventional service failure processing system is disclosed, for example, in Japanese Patent Publication No.59-46001/1984. In accordance with this prior art reference, a processor judges whether a control operation is stopped or started again automatically in accordance with the drop of a power source voltage and its period and if the service failure is an instantaneous service failure which does not render any particular problem, the control operation by the processor is automatically started once again. Automatic restoration of the processor is made in accordance with the condition of the instantaneous service failure in the construction described above.

If the power source voltage drops to a level which is somewhat insufficient for the operation of each circuit such as the microprocessor and yet permits its operation in the prior art publication described above, an abnormality interrupt signal is generated from a voltage monitor and is given to the processor so that the operating condition of the processor changes from "control" to "stop".

In the instantaneous service failure processing system described above, the service failure processing is carried out by selecting the processor operation either to halt or to complete stop in accordance with the drop of the power source voltage but a second processor is necessary for executing such a processing. Further, a power source of this second processor is necessary. Therefore, the control circuit gets complicated as a whole and becomes large in scale due to the space for the power source.

In the halt state of the processor operation, the power source is still supplied to the processor, the processor is still operable, input/output ports keep their outputs and each circuit is under the operating state. Accordingly, power consumption is not much great as a whole.

Though the prior art technique described above can bring the microprocessor to halt by detecting the voltage, the microprocessor enters the stop state at the time of actual service failure or at the time of cutoff of the power source because no backup mechanism is provided. Therefore, the content of a random access memory (RAM) cannot be protected. Even if a backup mechanism is provided, it must have a capacity large enough to keep the operations of the input/output circuits and each circuit because they are still under the operating state and hence the mechanism becomes great in scale.

To solve such problems, the present invention provides a initial start processing system which can make automatic return processing system which can make automatic return without requiring a second processor and a second power source.

EP-A-0 213 577 shows that the operation of a television receiver is also be stored to the data before the power failure regardless of a time length of the period of the power failure. In case of a power failure in this system, a period of which is so short that the data is not distructed, the television is restarted by the data in the volantile RAM. When the power failure continues until the data in the volantile RAM is distructed the television receiver is restarted in accordance with the data in the nonvolantile RAM, the data being renewed every time when the relais contact is opened. According to EP-A-0 256 815 an auxiliary nonvolantile memory is provided and the data are transmitted to the auxiliary memory from the computers RAM at the time of power failure. When the power failure is recovered, the operation is restarted in accordance with the data of the auxiliary memory.

### SUMMARY OF THE INVENTION

It is an object of the present invention to provide a processing system at the time of cutoff of power source which can protect data in the system even by use of a backup mechanism having a small capacity at the time of service failure, or the like.

This object is solved according to the invention by the features of claim 1.

A prefered embodiment of the invention is given in claim 2.

In the present invention the data in the volantile RAM is protected at the time of a power failure by the backup means, so that an automatic selection is made whether the operational mode is continued or stopped.

These and other objects and novel features of the present invention will become more apparent from the following detailed description when taken in conjunction with the accompanying drawings.

### BRIEF DESCRIPTION OF THE DRAWINGS

Fig. 1 is a block diagram showing schematically the structure of the principal portions of a control circuit of an air conditioner using an embodiment of the present invention;
Fig. 2 is an explanatory view showing allottment state of addresses of RAM, ROM and an interface portion shown in Fig. 1;
Fig. 3 is an operation explanatory view showing the main operations of the microprocessor shown in Fig. 1;
Fig. 4 is an explanatory view showing initial data used in the embodiment of the invention;
Fig. 5 is an operation explanatory view showing the main operations of the microprocessor shown in Fig. 1;
Figs. 6, 7 amd 9 are electronic circuit diagrams of the air conditioner using some embodiments of the present invention;
Fig. 8 is a time chart showing the change of the output of IC 44 shown in Fig. 7; and
Fig. 10 is a block diagram of the principal portions and shows the internal construction of the microcomputer shown in Fig. 2.

### DESCRIPTION OF THE PREFERRED EMBODIMENT

Hereinafter, a preferred embodiment wherein the start processing system of the invention is applied to an air conditioning system for heating or cooling on the basis of a set temperature the sets arbitrarily will be described.

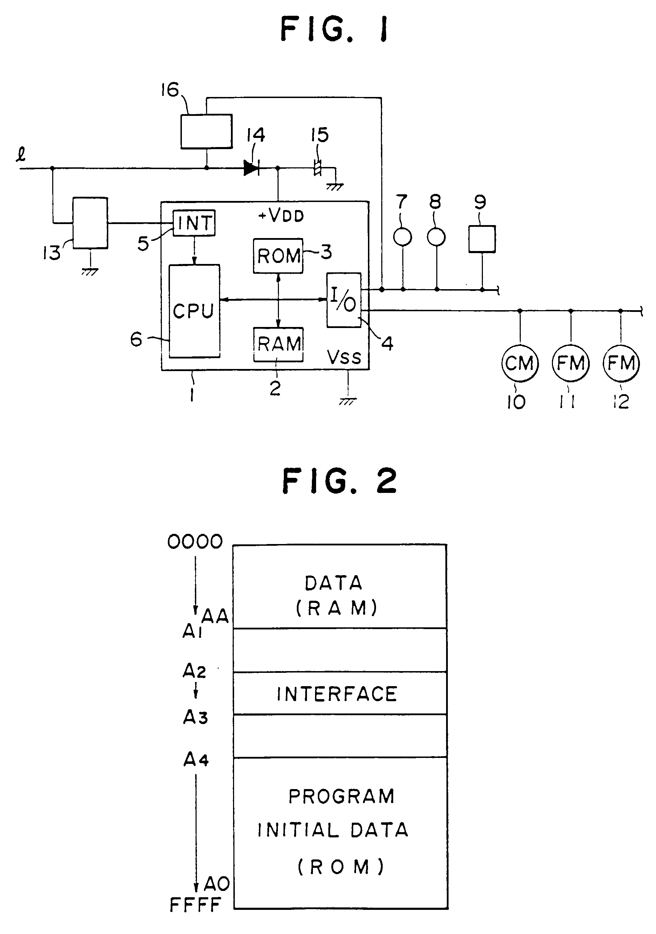

Fig. 1 is a block diagram showing schematically the principal portions of a control circuit of this air conditioner. In the drawing, reference numeral 1 represents a microprocessor for control, which includes a processor unit 6, a random access memory (hereinafter referred to as "RAM")2, a read-only memory (hereinafter referred to as "ROM") 3, an interface portion 4 and an interrupt control portion 5 that are molded unitarily. Incidentally, a terminal +VDD is a power input terminal and a terminal VSS is a ground terminal. This processor unit 6 executes a main processing operation on the basis of a program and initial data stored in ROM 3 and data which are stored and read to and from RAM 2. A temperature sensor (such as a thermistor) 7 for detecting the temperature of a room to be conditioned (room temperature), a humidity sensor 8 for detecting the humidity of the room, a key group 9 for setting or inputting operation modes such as cooling/heating modes, normal operation/timer operation, a room temperature set value, a humidity set value, a wind velocity, blasting direction of hot air/cold air, and so forth, a compressor 10, an indoor blower 11, an outdoor blower 12, etc, are connected to the interface portion 4. When a signal is given thereto from outside, the interrupt control portion 5 gives a signal to the processor unit and lets it execute a program for initial processing. The room temperature and humidity are subjected to A/D conversion (not shown) and converted to data and are then stored in RAM 2. The key operation of the key group 9 is inputted by a key scan and its result is stored in RAM 2. The operations of the devices 10 - 12 are controlled in response to the output signal of the interface portion 4. Reference numeral 13 represents a reset signal output portion, which outputs a reset signal after the passage of a predetermined time (the time in which a charge is sufficiently charged in a capacitor 15) from the arrival of the potential of a power source bus l at a predetermined value (a power-ON reset circuit of a power source monitor IC).

A diode 14 prevents the charge stored in the capacitor 15 from flowing to the power source side or to the reset signal output portion 13 at the time of cut-off of the power source. This capacitor 15 is for the microprocessor 1 (mainly for back-up of RAM 2) and its capacitance is set with a time of about 10 minutes as a guideline. Incidentally, the backup mechanism may be constituted by use of a chargeable/dischargeable battery in place of the capacitor 15. A voltage drop detection circuit 16 gives a signal to the interface portion 4 when the voltage of the power source bus 1 is below a predetermined value (below about 95% of the rated voltage). Detecting this signal, the microprocessor 1 enters the stand-by state (where only preservation of the data of RAM 2 is made). In other words, preservation of the data of RAM 2 becomes possible in the discharge period of the capacitor 15.

In the air conditioner having the construction described above, the operation of the compressor 10 is controlled by comparing the set temperature of the room set mainly by the key group 9 with the room temperature detected by the temperature sensor 7 in the normal operation so as to make the temperature control of the room.

In Fig. 2 which shows the allotment state of addresses of RAM 2, ROM 3 and the interface portion 4, the addresses 0000 - Al are the memory area which is set to RAM 2 and represent a data area. The addresses A2 - A3 represent an interface area (the space which designates the output of the interface portion 4). The address A4 - FFFF is the memory area space which is set to ROM 3 and represents a program (a program for executing the initial processing and a program for executing the main processing) and an initial data.

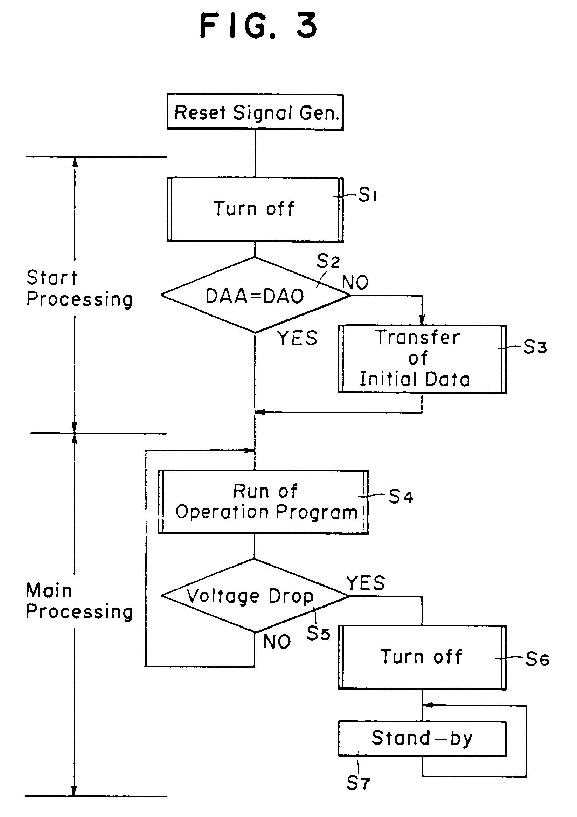

In Fig. 3 which is an operation explanatory view showing the main operations of the microprocessor 1, when the reset signal is outputted from the reset by the interrupt control portion 5. At this step S1, all the devices such as the compressor 10, the blowers 11, 12, etc, are all stopped. Next, the flow proceeds to step S2, and whether or not the DAA value is equal to the DA0 value is judged. The DAA value is the value of the data stored in the address AA shown in Fig. 2 (the value stored at the address AA of RAM) and similarly, the DA0 value is the value of the data stored in the address A0 (the value stored at the address A0 of ROM). In other words, the judgement at this step S2 is to judge whether or not the data in RAM 2 are destroyed by the cut-off of the power source from the power source bus l. Incidentally, so long as the stored charge exists in the capacitor, continuous power supply is secured and destruction of the data due to cut-off of the power source bus 1 does not occur. If the condition of the step S2 is not satisfied, the flow proceeds to step S3. Transfer of the initial data is made at this step S3. In other words, the data stored in ROM 3 are transferred to RAM 2. At this time the data of the address DA0, too, is also moved to the address DAA. The steps Sl - S3 described above are the program for executing the initial processing.

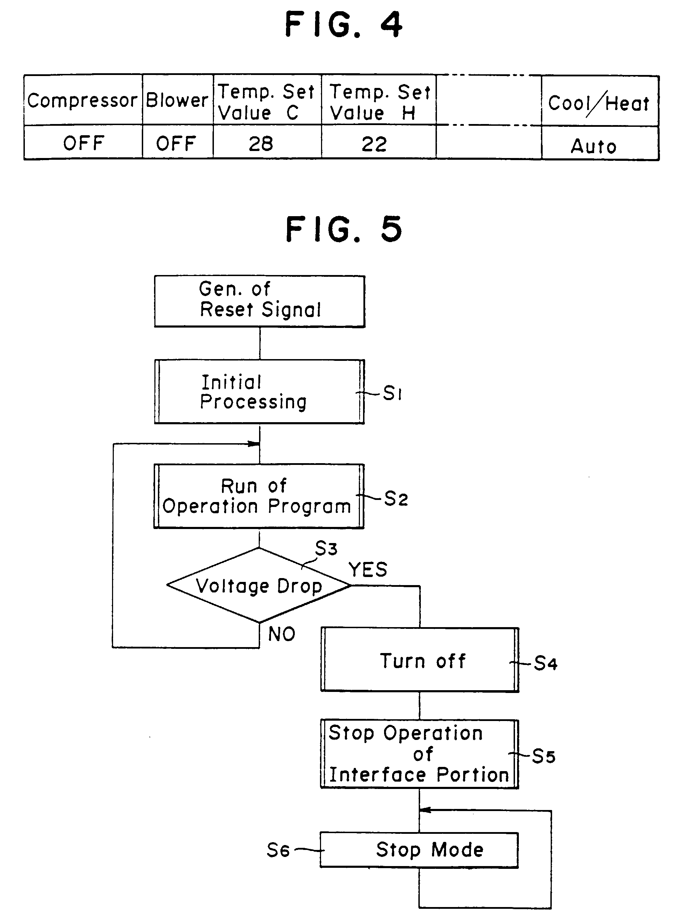

Fig. 4 is an explanatory view showing the initial data. Data such as OFF (stop) for the compressor, OFF (stop) for the blower, 28°C for a set temperature C (for cooling operation), 22°C for a set temperature H (for heating operation), ..., automatic selection for the cooling/heating modes (which are selected in accordance with the room temperature at the start of the operation), and the like, are set in advance. In other words, the initail data are those data which set the air conditioner to the stop state. When step S3 is executed, the initial data are transferred to the corresponding position of RAM 2. When DAA=DA0 is judged at step S2 or after step S3 is executed, the flow proceeds to step S4. The operation program of the air conditioner is executed at this step S4. For example, the room temperature and the set temperature stored in RAM 2 are compared to control the operation of the compressor, the blast quantity of the blower is controlled by the difference between the room temperature and the set value and the time is counted during the timer operation. Next, the flow proceeds to step S5, and whether or not the voltage of the power source bus l drops below a predetermined value is judged. In other words, whether or not the voltage drop detection circuit 16 outputs the signal is judged. When the voltage of the power source bus l drops, the flow proceeds to step S6. The devices are turned OFF at this step S6. In other words, the air conditioner is stopped. The flow then proceeds to step S7, where the processor unit 6 is brought into the stand-by state. These steps S4 - S7 are the program for executing the main processing.

In the operation by use of the air conditoner having such a construction, when the power is first applied to the air conditioner, the power is supplied through the power source bus l and charging of the capacitor 15 is started through the diode 14. At the same time, the power is supplied to the +VDD terminal of the microprocessor 1 and the microcomputer becomes operative. When the charge is sufficiently stored in the capacitor 15, the reset signal output portion 13 outputs the reset signal. Inputting this reset signal, the micropocessor 1 first executes the program of initial processing. In other words, after the air conditioner is once stopped, the data of the address AA and the content of the address A0 are compared but since the charge of the capacitor 16 has fully been discharged and the data of RAM 2 is not backed up, the judgement at step S2 proves to be "NO". Accordingly, the initial data are moved to RAM 2 at step S3 and further, the data of the address A0 are moved to the area of address AA of RAM 2, too. Thereafter, while the air conditioner is kept stopped, the program of the main processing is run. When the cooling or heating signal is outputted by the key group 9 during the running of this main program, the air conditioner starts cooling or heating on the basis of the initial data. If the content of the inital data is not satisfactory to the user, the content of this data, that is, the set values (the temperature set value, the wind quantity, etc) are changed by the key group 9. The operation is thereafter carried out on the basis of such set values. If the voltage of the power source supplied from the power source bus l drops below the predetemined voltage due to service failure or cut-off of the power source after the operation is kept or in other words, when the voltage drop detection circuit 16 outputs the signal, the microprocessor 1 executes the step S6. Namely, the air conditioner is stopped, the flow then proceeds to step S7 and the stand-by state is maintained. Accordingly, this air conditioner continues to keep only the data stored in RAM 2 until the capacitor 15 is discharged.

Thereafter, if the charge exists in the capacitor 15 and restoration of the services failure or the supply of the power source is started once again while the back-up operation of RAM 2 is conducted, the reset signal output portion 13 outputs the reset signal and the initial processing is executed from step S1 in the same way as described above. Since the content of RAM 2 has been backed up by the capacitor 15, the data of the address AA is in agreement with the data of the address A0. (The data of the address A0 has been moved from ROM 3 to the address AA at the previous start.) Accordingly, the flow proceeds to step S4 without executing step S3 and the program of the main processing is run. Since the air conditioner is kept operated by the data of RAM 2 at this time (due to the previous manual setting), the compressor is turned "ON" on the basis of this data and the blower is turned "ON", for example, so that the operation of the air conditioner is automatically started again under the same operating condition as at the time of stop (or at the time of cut-off of the power supply).

When restoration of the service failure or the supply of the power source is restarted after the capacitor 15 is discharged, the reset signal is likewise outputted, but since step S2 is not satisfied, the flow proceeds to step S3, where the data of RAM 2 is re-written to the initial data of ROM 3. Accordingly, the air conditioner enters the stop state when the program of the main processing is run.

When restoration of the service failure or the supply of the power source is re-started while the charge exists in the capacitor 15 as described above, the operation of the air conditioner is automatically started again under the same operating condition as at the time of the service failure or the re-start of the supply of the power source and when restoration of the service failure or the supply of the power source is re-started after the capacitor 15 is discharged, the air conditioner is kept stopped.

Next, the processing system of the present invention at the time of cut-off of the power source will be explained with reference to the same embodiment as described above.

In Fig. 1, the voltage drop detection circuit 16 outputs the signal when the voltage of the power source bus l reaches about 95% of the rated voltage of the microprocessor 1. The rated voltage of the microprocessor used in this embodiment is 5 V and the operation guarantee voltage is from 4.5 V to 5.5 V. Therefore, 95% of the rated voltage corresponds to about 4.75 V. Accordingly, this voltage drop detection circuit 16 outputs the signal when the voltage of the power source bus l is below 4.75 V. Since the back-up time is the time period in which the voltage of the capacitor 15 becomes below the voltage necessary for driving RAM 2, the detection voltage of this voltage drop detection circuit is preferably as high as possible and a voltage which does not cause an erroneous operation due to the ripple of the voltage of the power source bus l is preferable. From these aspects, about 95% of the rated voltage is optimal.

Detecting the signal from the voltage detection circuit 16, the microprocessor 1 enters the stop mode, that is, the mode in which only the power supply to RAM 2 is made after the operation of the interface portion 4 is stopped. When the operation of the interface portion 4 is stopped, the inputs from the temperature sensor 7, the humidity sensor 8 and the key group 9 are cut off, the devices such as the compressor 10 and the blowers 11, 12 are stopped and only the preservation of the data of RAM 2 is mainly conducted.

Fig. 5 is an operation explanatory view showing the principal operations of the microprocessor 1. When the reset signal is first outputted from the reset signal output portion 13, step Sl is executed by the reset processing portion 5. The operating condition of the air conditioner is set to the stop state at step Sl. If the content of RAM 2 is backed up by the capacitor 15 at this time, the operation program of step S2 is as such executed without changing the content of RAM 2 and if the content of RAM 2 is not backed up by the capacitor 15, the operation program of step S2 is executed after the initial data of ROM 3 are transferred to RAM 2. The operation program of the air conditioner is run at this step S2. For example, the room temperature is compared with the set temperature stored in RAM 2, the blast quantity of the blower is controlled by the difference between the room temperature and the set value and the time is counted during the timer operation. Next, the flow proceeds to step S3 and whether or not the voltage of the power source bus l drops below 4.75 V is judged. In other words, whether or not the signal is outputted from the voltage drop detection circuit 16 is judged. When the voltage of the power source bus l drops, the flow proceeds to step S4. At this step S4, the devices are turned OFF. In other words, the air conditioner is stopped. Next, the flow proceeds to step S5, where the operation of the interface portion 4 is stopped. Therefore, the A/D conversion operation of the analog data by the temperature sensor 7 and humidity sensor 8 and the key scan input of the key group 9 are stopped. The flow then proceeds to step S6, where the processor unit 6 is kept under the stop mode. The reset signal may be outputted in order to release this stop mode.

If the voltage of the power source supplied from the power source bus l drops below 4.75 V due to a service failure or cut-off of the power source during the operation of the air conditioner having such a construction, that is, if the voltage drop detection circuit 16 outputs the signal, the microprocessor 1 executes the of steps S4 to S6. Namely, the operation mode becomes the stop mode after the air conditioner is set to the stop mode after the air conditioner is set to the stop state. Accordingly, in this air conditioner, the data stored in RAM 2 are preserved until the charge stored in the capacitor 15 is discharged.

Thereafter, if restoration of the service failure or re-start of the supply of the power source is made while the data of RAM 2 is preserved, the reset singal output portion 13 outputs the reset signal and the initial processing of step S1 is executed. Since the content of RAM 2 has been backed up by the capacitor 15, the operation is as such carried out once again.

Next, another embodiment of the invention, wherein another processing system at the time of cut-off of the power supply of the invention is carried out in such as air conditioner, will be explained.

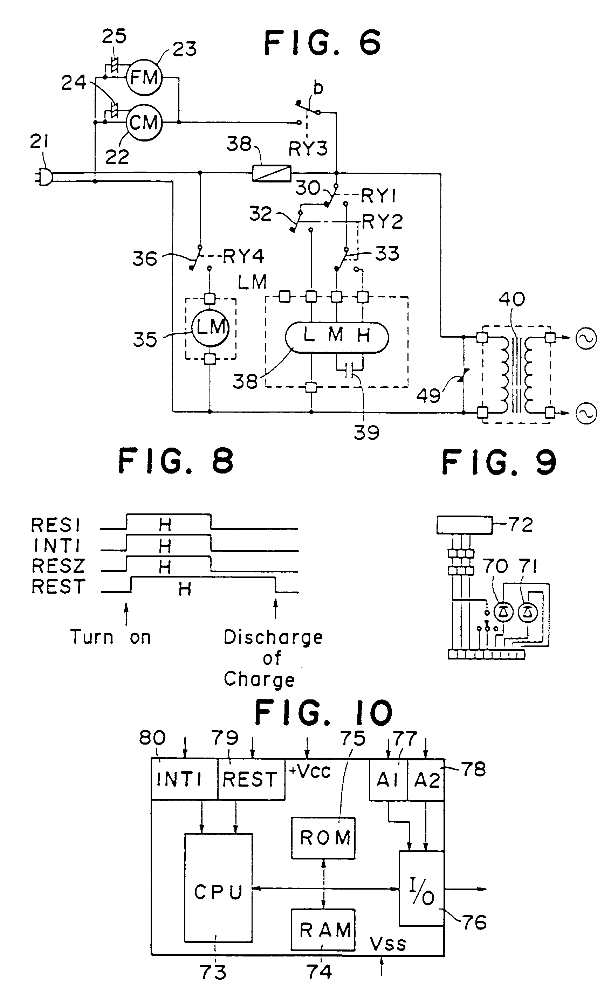

In this air conditioner, a refrigeration system having a compressor, a condenser, an expansion device and an evaporator are connected in a refrigerant flow relationship, and the evaporator is disposed on the indoor side so as to make the cooling operation inside the room by the evaporation of the compressed cooling medium. Figs. 6, 7 and 9 are electronic circuit diagrams for controlling the operation of this air conditioner. In Fig. 6, reference numeral 21 represents a plug connected to an A.C. power source; 22 is the compressor; and 23 is a blower motor which sends the blast to an outdoor heat-exchanger (condenser) and which is connected in such a manner as to be turned on and driven simultaneously with the compressor 22. Reference numerals 24 and 25 represent operation capacitors for the compressor 22 and for the blower motor 23, respectively. Reference numeral 26 represents a normally-open contact, which is closed when a relay 27 is excited (the relay 27 being shown unexcited in the drawing). When this normally-open contact 26 is closed, the compressor 22 and the blower motor 23 are energized.

Reference numeral 28 represents a blower motor for sending the blast to an indoor heat-exchanger (evaporator). Intermediate terminals are provided to an excitation coil so that the wind velocity can be switched to three stages, i.e., L (little wind), M (medium wind) and H (hard wind). Reference numeral 29 represents an operation capacitor for the blower motor 28 and reference numeral 30 represents a change-over contact, which is switched to the opposite state to the state shown in the drawing when a relay 31 is excited. Reference numerals 32 and 33 represent change-over contacts which are switched in an interlocking arrangement with each other and are switched to the opposite state to the state shown in the drawing when a relay 34 is excited. The wind velocity is switched to L, M and H by the switching combinations of these change-over contacts 30, 32 and 33.

Reference numeral 35 represents a flap motor, which changes the direction of wind obtained by the operation of the blower motor 38. When this motor 35 is energized, the wind direction is changed continuously within a predetermined range of angle. This motor 35 is energized when a normally-open contact 36 is closed and this contact 36 is in turn closed when a relay 37 is excited. When it is desired to fix the wind direction at a predetermined angle, the motor 35 is first energized and is then stopped when the desired wind direction is attained.

Reference numeral 38 represents a current fuse and reference numeral 39 represents a varistor disposed on the primary side of a step-down transformer 40.

Reference numeral 31 represents a bridge diode for full wave rectification. After the A.C. outputted from the step-down transformer is subjected to full wave rectification, it is smoothed by smoothing capacitors 42, 43 so that the output of DC 12 V can be obtained at the position of a point PO12.

Reference numeral 44 reperesents an IC (LA5693D) for resetting a microcomputer 46. This IC 44 outputs a reset signal from its terminals RES1, RES2 in accordance with the change of the voltage applied to a terminal VS. Reference numerals 45, 46 and 47 represent voltage division resistors and reference numeral 48 represents a capacitor, which adjusts the output timing of the reset signal by adjusting the level of the voltage applied to the terminal VS of IC 44.

Reference numeral 62 represents a transistor whose base terminal is connected to the terminal VCONT of IC 44. This transistor 45 is subjected to ON/OFF control by the switching output from the terminal VCONT so that the voltage applied to the terminal VO of IC 44 is 5 V. Accordingly, the constant voltage output of DC 5V can be obtained at the position of point PO5.

Incidentally, the terminals RES1 and RES2 output the same signal when the termical CK of IC 44 is pulled up to the power source voltage side. In this embodiment the signal outputs of the terminals RES1, RES2 are set in the following manner by suitably setting the resistance values of the resistors 45 - 47 and the capacitance of the capacitor 48. Namely, an H level (5 V) voltage is outputted when the voltage at the position of the point PO5 is at least 4.9 V and this H level output voltage changes to an L (substantially zero volt) voltage output when the voltage at this point PO5 is thereafter below 4.75 V.

The terminal RES1 of IC 44 is connected to the terminal INT1 of the microcomputer 46. The terminal RES2 is connected to the terminal REST of the microcomputer 46 after passing through a delay circuit. The delay circuit comprises a comparator 49, resistors 50 - 53, a capacitor 54, a resistor 55 and a diode 56 for positive feedback, and a transistor 57. The resistance values of these resistorS and the capacitance of the capacitor are set so that this delay circuit has a delay of about 200µs when the output of the terminal RES2 of IC 44 changes from the L level voltage to the H level voltage.

Reference numeral 58 represents a back-up capacitor and reference numerals 59 and 60 represent switching transistors. Before making of the power source, the output of the terminal RES2 of IC 44 is the L level voltage. Therefore, the charge is not stored in the back-up capacitor 58. The transistor 57 is OFF, the transistor 60 is OFF and the transistor 59 is OFF. Thereafter, when the power source is made and the output of the terminal RES2 of IC 44 becomes the H level voltage, the transistor 57 is ON and the terminal REST of the microcomputer 56 attains the L level because the 5 V voltage is supplied to the terminal Vcc of the microcomputer 56. At this time the transistor 59 is OFF simultaneously. Thereafter, when the output of the comparator 49 becomes the H level voltage, the transistor 57 is OFF and the impressed voltage of the terminal REST of the microcomputer 46 changes to the H level voltage. In other words, the terminal REST of the microcomputer 56 changes from the L level to the H level voltage and resets the microcomputer 56. Then, the charge is charged to the backup capacitor 58 and this charging is kept while the power source voltage is supplied. Incidentally, the output of the terminal REST1 of IC 44 is the same as the output of the terminal REST 2 and the H level voltage is applied to the terminal INT1 of the microcomputer 56. If a cut-off of the power source voltage (such as the service failure) occurs after such a state, the voltage applied to the terminal VS of IC 44 decreases gradually in match with the discharge of the charges of the capacitors 42, 43 and 48. The outputs of the terminals RES1 and RES2 of IC 44 first fall to the L level voltage in accordance with this voltage drop. Therefore, the impressed voltage of the terminal INT1 of the microcomputer 56 first changes to the L level voltage. Thereafter, the transistors 57 and 60 are OFF after the discharge of the charge of the capacitor 54 and at the same time, the transistor 59 is ON. Since the transistor 59 is ON, the charge stored in the capacitor 58 is supplied to the terminal REST of the microcomputer 56 through this transistor 59. This power supply time is determined by the quantity of the charge stored in the capacitor 58. The operations described above with the passage of the time are shown in Fig. 3.

Incidentally, the capacitor 58 is for the microcomputer 46 (mainly for backing up RAM 74) and its capacitance is set with the backup time of about 10 minutes being the guideline. The IC 44 changes the outputs of the terminals RES1, RES2 from the H level voltage to the L level voltage when the voltage is below about 95% of the rate voltage applied to the microcomputer 56. The rated voltage of the microcomputer used in this embodiment is 5 V and its operation guarantee voltage is from 4.5 to 5.5 V. Therefore, 95% of the rated voltage described above is about 4.75 V. The back-up time is the period of time in which the voltage of the capacitor 58 becomes below the voltage necessary for driving RAM 74. Therefore, the detection voltage of the voltage detection circuit is preferably as high as possible and is a voltage which does not cause an erroneous operation due to the ripple of the voltage of the power source. From these aspects, about 95% of the rated voltage is optimal.

Reference numerals 62 and 63 represent temperature sensors for detecting the temperature of the indoor heat-exchanger (evaporator) and the temperature of the room to be air-conditioned, respectively, and these sensors use those types whose internal resistance changes with a temperature, such as a thermistor. These temperature sensors are connected in series with bias resistors to the power source voltage and the change of the internal resistance of the temperature sensors can be taken out as the change of the voltage. The change of the voltages is applied to the terminals A1, A2 of the microcomputer 56, respectively. Incidentally, these terminals A1 and A2 are the input terminals of the analog voltage and are connected to an A/D (analog/digital) conversion circuit inside the microcomputer 56. In other words, the voltages applied to these terminals are converted to digital values and are processed inside the microcomputer.

Reference numerals 65 to 67 represent drivers, each of which excites the relay 31, 34, 37, 27 on the basis of the output from the microcomputer 56. Reference numeral 67 represents a driver for driving a buzzer and this driver actuates the buzzer 68 in accordance with the signal from the microcomputer 56.

Reference numeral 69 represents a connector, which is connected to an electronic circuit shown in Fig. 9. In Fig. 9, reference numerals 70 and 71 represent light emission diodes, whose ON/OFF is controlled in accordance with the outputs from the terminals D0, D3 of the microcomputer 56. Reference numeral 72 represents a reception amplifier portion, which receives an infrared signal from a remote controller, amplifies the signal and then outputs it to the microcomputer 56. The remote controller outputs control signals such as the start/stop operations of the air conditioner, temperature setting, setting of wind direction and quantity, and so forth, by wireless signals.

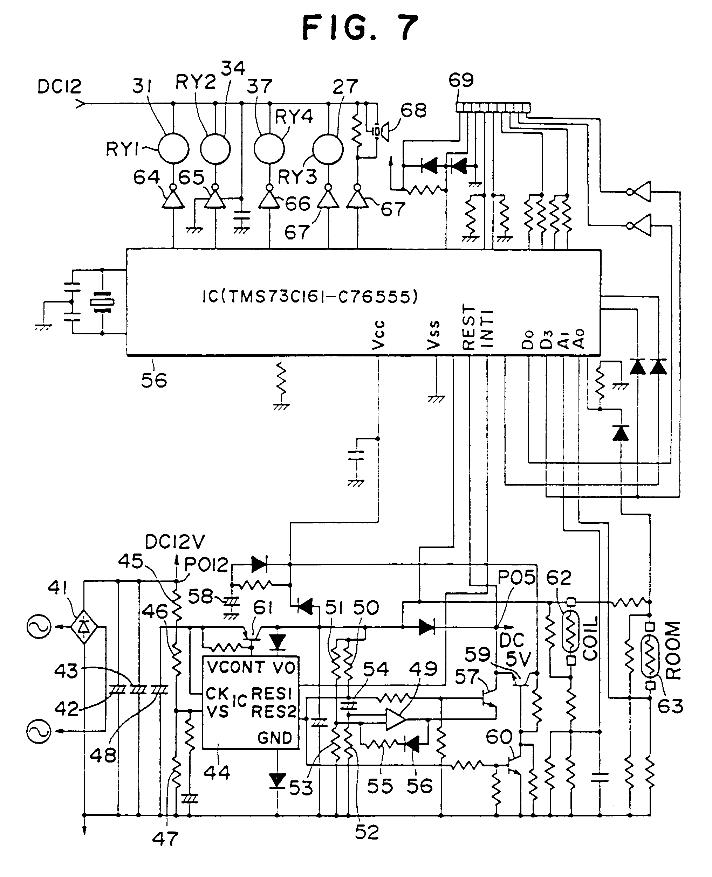

Fig. 10 is a block diagram showing the internal structure of the principal portions of the microcomputer 56 shown in Fig. 7. In the diagram, the microcomputer 56 includes a processor unit 73, a random access memory (RAM) 74, a read-only memory (ROM) 75, an interface 76, a reset processing portion 79, a stop mode processing portion 80, and A/D input processing portions 77, 78. These elements are all molded in unitary structure. Incidentally, a terminal +Vcc is a power source input terminal and a terminal Vss is a ground terminal. This processor unit 73 executes the processing operation on the basis of the program and initial data stored in ROM 75 and on the basis of the data which are imputted and outputted to and from RAM 74 through the interface 76. This interface 76 inputs the room temperature of the room to be air-conditioned and the temperature of the evaporator obtained from the A/D input processing portions 77, 78 and the remote controller signals obtained from the reception amplifier portion, and outputs the relay excitation signal, the buzzer activation signal, the ON signal of the light emission diodes, and the like. Reference numeral 79 represents a reset processing portion, which gives a signal to the processor unit and lets it execute the program for start processing when a signal is given thereto from outside (the voltage change of the impressed voltage from the L level to the H level).

When the impressed voltage of the terminal INT1 changes from the H level voltage to the L level voltage, the stop mode processing portion operates and the microcomputer 56 enters the stop mode, that is, the mode wherein the operation of the interface 76 is stopped and then only power supply to RAM 74 is made. Since the operation of the interface 76 stops, the inputs from the temperature sensors 62, 63 and remote controller are cut off, the devices such as the compressor, the blowers, etc, are stopped and only data preservation of RAM 74 is mainly made.

In the construction described above, the main operation of the microcomputer 56 is the same as that of the embodiment described already. Namely, in Fig. 10, when the reset signal which changes the voltage applied to the reset processing portion 79 changes from the L level voltage to the H level voltage is provided, the reset processing portion 79 first executes step S1. The operating condition of the air conditioner is set to the stop state at this step S1. If the content of RAM 74 is backed up by the capacitor 58 at this time, the content of RAM 74 is not changed but the operation program of step S2 is as such executed. If the content of RAM 74 is not backed up by the capacitor 58, the initial data of ROM 75 are first moved to RAM 74 and then the operation program of the air conditioner is executed at step S2. For example, the operation of the compressor is controlled by comparing the room temperature with the set temperature stored in RAM 74, the blast quantity from the blower is controlled by the difference between the room temperature and the set value and the time is counted at the time of the timer operation. Then, the flow proceeds to step S3, and whether or not the power source voltage drops to 4.75 V is judged or in other words, whether or not the voltage applied to the stop mode processing portion 80 changes from the H level voltage to the L level voltage is judged. If the power source voltage drops, the flow proceeds to step S4. The devices are turned OFF at this step S4. Next, the flow proceeds to step S5, where the operation of the interface 76 is stopped. In this manner, the supply of power to the temperature sensors 62, 63, the A/D conversion of the analog data and the input from the remote controller are stopped. The flow then proceeds to step S6, where the processor unit 73 is kept in the stop mode. This stop mode can be released by applying the reset signal to the reset processing portion.

At this time, since the H level voltage is kept applied to the REST terminal of the microcomputer 56, the processor unit 73 of the microcomputer 56 is under the stable state and the consumed current of the microcomputer 46 can be reduced by about 500µA. If the L level voltae is kept applied to the REST terminal of the microcomputer 56, there is current consumption of about 10 mA.

Accordingly, if the voltage supplied to the microcomputer 56 drops below 4.75 V due to the service failure or cut-off of the power source during the operation of the air conditioner having the construction as described above, that is, when the output of the terminal RES1 of IC 44 changes from the H level voltage to the L level voltage, the microcomputer 56 enters the stop mode in accordance with the operations of steps S4 to S6. Therefore, in this air conditioner, the data stored in RAM 74 is preserved before the charge stored in the capacitor 58 is discharged fully. If restoration of the service failure is made or the supply of the power source is started again while the data of RAM 74 is preserved, the reset signal which changes the voltage applied to the terminal REST of the microcomputer 56 from the L vevel voltage to the H level voltage is provided, and the start processing of step S1 is executed. Since the content of RAM 74 is backed up by the capacitor 58, the operation is again excuted as such.

As described above, in the system using a processor or microprocessor which excutes a main processing on the basis of a predetermined program after executing a predetermined initial processing when the microprocessor receives an input of a reset signal which is outputted at the time of restoration of a power source, the start processing system after cut-off of the power source in accordance with the present invention includes a ROM storing a program for executing the initial processing, a program for executing a main processing and initial data; a RAM for storing and reading data when the main processing is executed; and a backup circuit for keeping the driving state of the RAM for a predetermined period after the cutoff of the power source; and includes also in the program for executing the initial processing a program for comparing the data stored at a predetermined address area of the RAM with data stored at a predetermined position of the read-only memory and for move the initial data stored in the ROM to the RAM when the result of comparison does not prove coincident, or a program for executing the main processing by use of the data stored in the RAM when the result of comparison proves coincident. Accordingly, if instantaneous service failure or instantaneous cut-off of the power source occurs during a predetermined period of time in which the RAM is backed up, the operation of the apparatus can be automatically resumed under the same state as before the service failure or the cut-off of the power source when restoration of the service failure is made or the supply of the power source is started again. If restoration of the service failure is made or cut-off of the power source is started again after the passage of the predetermined period described above, the apparatus keeps the stop state. Accordingly, the restoration operation of the service failure within a predetermined period of time becomes unnecessary for the control of the apparatus for which continuity of the operation is of utmost importance, and inspection and maintenance can be improved remarkably.

In a microprocessor including a processor unit and an random access memory for storing and reading data with this processor unit and equipped with a stop mode for stopping the operation of part of the functions of the microprocessor while putting priority to its driving so as to limit power consumption, the processing system at the time of cutoff of power source in accordance with the present invention includes a backup mechanism for keeping the power supply to the microprocessor for at least a predetermined period of time from the cutoff of the power source and a voltage drop detection circuit for detecting the power source voltage supplied to the microprocessor, and brings the microporcessor into the operation mode when the voltage value detected by this voltage detection circuit drops near to the operation guarantee voltage of the microprocessor. Accordingly, the microprocessor is brought into the stop mode before the power source voltage drops and the microprocessor becomes inoperative and driving of the RAM is made preferentially so as to protect the data of the memory. In this instance, since part of other functions of the microprocessor is stopped to limit power consumption, backup for long period can be made by reducing the capacity of the backup mechanism.

In a microcomputer including a processor unit which starts an operation based on a program when a signal by edge trigger is applied to its reset terminal and an random access memory for storing and reading data with this processor unit, and equipped with a stop mode for stopping part of the functions of the random access memory while putting priority to its driving so as to limit power consumption, the processing system at the time of cutoff of power source in accordance with another embodiment of the present invention includes a backup circuit for keeping the power supply to a peripheral circuit of the microcomputer for at least a predetermined period of time from the cutoff of the power source and a voltage detection circuit for detecting the power source voltage supplied to the microcomputer in a peripheral circuit of the micro computer, brings the microcomputer into the stop mode when the voltage value detected by this voltage detection circuit drops near to the operation guarantee voltage of the microcomputer and supplies the power from the backup circuit to the reset terminal during this stop mode. Accordingly, the microcomputer is brought into the stop mode before it becomes inoperative as a result of the drop of the power source voltage, drives preferentially the random access memory and thus can protect the data of the memory. In this instance, since other functions are partially stopped so as to reduce power consumption, backup for a long period of time can be made even when the capacity of the backup function is reduced.

## Claims

1. A system including:
a plurality of electronic appliances (12, 13, 14);
a input means (9) for setting variable data for controlling said electronic appliances (12, 13, 14); and
a microcomputer system (1) comprising:
a processor unit (6; 73) for executing an inital process for said system and a main process for controlling said electric appliances in accordance with a predetermined program and said variable data, wherein the inital and main processes are executed when a reset signal generated by supplying an electric power to said system is applied to said processor unit (6; 73);
a non-volatile memory (ROM) (3; 75) for storing data and programs in a non-volatile way, storing: an inital program for executing said inital process, a main program for executing said main process, and initial data for initializing the operational conditions of said electric appilances (12, 13, 14);
a random access memory (RAM) (2; 74) storing said variable data for controlling said electronic appliances (12, 13, 14) while said processor unit (6; 74) is running the main program;
a backup circuit (14, 15; 58) for keeping the electric power to said RAM (2; 74) for at least a predetermined period after cutting off the electric power of the system;
**characterized by**,
said initial data for initializing the operational conditions of said electric appliances (12, 13, 14) maintains said system in a stop state,
said ROM (3; 75) further storing first data (DA0) to be read out by said processor unit (6; 74) while running the initial program,
said RAM (2; 74) further storing second data (DAA), wherein the initial program has the following five steps: first step for initializing said processor unit (6; 74), second step, following after said first step, for reading out said first and second data and then judging coincidence of the first and second data,
third step, following after said second step, for running the main program when the first data are equal to the second data, and
fourth step, following after said second step, for changing the variable data for controlling said electronic appliances (12, 13, 14) in said RAM (2; 74) to the initial data in said ROM (3; 75) when the first data are not equal to the second data, and
fifth step, following after said fourth step, for changing the second data in said RAM (2; 74) to the first data in said ROM (3; 75), and then running the main program.

2. A system according to claim 1,
**characterized** in that said system further comprises:
a stop mode for partially stopping the operation of said processor unit to thereby reduce the consumption of electric power within said system, said stop mode being maintained preferentially relative to an operation of said RAM, and
a voltage detection circuit (16) for detecting the voltage of the electric power source supplied to said system, wherein when said voltage detection circuit (16) detects that the voltage of said electric power source is less than a predetermined value, an operation mode of said processor is changed to said stop mode, and while said stop mode is maintained, high or low digital signal is applied to reset terminals of said processor by the use of an electric power from said backup circuit (14, 15, 58).

## Patentansprüche

1. Ein System mit:
einer Vielzahl von elektronischen Geräten (12, 13, 14);
einer Eingabevorrichtung (9) zum Setzen variabler Daten zur Steuerung der elektronischen Geräte (12, 13, 14), und
einem Mikrocomputersystem (1) mit:
einer Prozessoreinheit (6, 73) zum Durchführen eines Start-prozesses für das System und eines Hauptprozesses zum Steuern der elektrischen Geräte in Übereinstimmung mit einem vorbestimmten Programm und den variablen Daten, wobei der Start- und Hauptprozeß durchgeführt werden, wenn ein Reset-Signal, das erzeugt wird durch Zufuhr elektrischer Leistung zum System, der Prozessoreinheit (6, 73) zugeführt wird;
einem nichtflüchtigen Speicher (ROM) (3, 75) zum Speichern von Daten und Programmen auf nichtflüchtige Weise, welcher speichert: ein Startprogramm zum Durchführen des Startprozesses, ein Hauptprogramm zum Durchführen des Hauptprozesses und Startdaten zum Initialisieren der Betriebsbedingungen der elektrischen Geräte (12, 13, 14); einem Speicher mit wahlfreiem Zugriff (RAM) (2, 74), welcher die variablen Daten für die Steuerung der elektronischen Geräte (12, 13, 14) speichert, während die Prozessoreinheit (6, 74) das Hauptprogramm durchläuft;
einer Sicherungsschaltung (14, 15, 58) zum Halten der elektrischen Leistung am RAM (2, 74) über mindestens eine vorbestimmte Zeitspanne, nachdem die elektrische Leistung des Systems ausgeschaltet wurde,
dadurch **gekennzeichnet,** daß
die Startdaten für Initialisierung der Betriebsbedingungen der elektrischen Geräte (12, 13, 14) das System in einem Stop-Zustand hält,
der ROM (3, 75) ferner erste Daten (DA0) speichert, die von der Prozessoreinheit (6, 74) ausgelesen werden sollen, während das Startprogramm läuft,
der RAM (2, 74) ferner zweite Daten (DAA) speichert, wobei das Startprogramm die folgenden fünf Schritte aufweist: einen ersten Schritt zur Initialisierung der Prozessoreinheit (6, 74),
einen zweiten Schritt, der dem ersten Schritt folgt, zum Auslesen der ersten und zweiten Daten und zur darauffolgenden Beurteilung der Koinzidenz der ersten und zweiten Daten,
einen dritten Schritt, der dem zweiten Schritt folgt, zum Durchführen des Hauptprogramms, wenn die ersten Daten gleich den zweiten Daten sind, und
einen vierten Schritt, der auf dem zweiten Schritt folgt, zum Ändern der variablen Daten zur Steuerung der elektronischen Geräte (12, 13, 14) im RAM (2, 74) auf die Startdaten im ROM (3, 75), wenn die ersten Daten nicht gleich den zweiten Daten sind,
und einen fünften Schritt, der dem vierten Schritt folgt, zum Ändern der zweiten Daten im RAM (2, 74) auf die ersten Daten im ROM (3, 75) und zum darauffolgenden Durchführen des Hauptprogramms.

2. Ein System nach Anspruch 1,
dadurch **gekennzeichnet,** daß das System ferner aufweist:
einen Stopmodus zum partiellen Stoppen des Betriebs der Prozessoreinheit, um dadurch den elektrischen Leistungsverbrauch innerhalb des Systems zu reduzieren, wobei der Stopmodus vorzugsweise beibehalten wird in Relation zum Betrieb des RAM, und
eine Spannungsdetektionsschaltung (16) zum Detektieren der Spannung der elektrischen Spannungsversorgung, die dem System zugeführt wird, wobei, wenn die Spannungsdetektionsschaltung (16) entdeckt, daß die Spannung der elektrischen Spannungsversorgung kleiner ist als ein vorbestimmter Wert, der Betriebsmodus des Prozessors geändert wird auf den Stopmodus, und während der Stopmodus beibehalten wird, ein hohes oder niedriges Digitalsignal zugeführt wird, um die Anschlüsse des Prozessors rückzusetzen durch Benutzung einer elektrischen Leistung von der Sicherungsschaltung (14, 15, 58).

## Revendications

1. Système comprenant :
une pluralité d'appareils électroniques (12, 13, 14) ;
des moyens d'entrée (9) destinés à déterminer des données variables pour commander lesdits appareils électroniques (12, 13, 14) ; et
un système de micro-ordinateur (1) comprenant :
une unité formant processeur (6 ; 73) pour exécuter un processus initial pour ledit système et un processus principal pour commander lesdits appareils électriques conformément à un programme prédéterminé et auxdites données variables, dans lequel les processus initial et principal sont exécutés lorsqu'un signal de remise à zéro généré en fournissant une alimentation électrique audit système avec une alimentation électrique, est appliqué à ladite unité formant processeur (6 ; 73) ;
une mémoire non-volatile (ROM) (3 ; 75) pour stocker les données et les programmes de manière non-volatile, stockant: un programme initial pour exécuter ledit processus initial, un programme principal pour exécuter ledit processus principal, et des données initiales pour initialiser les conditions de fonctionnement desdits appareils électriques (12, 13, 14) ;
une mémoire à accès direct (RAM) (2 ; 74) stockant lesdites données variables pour commander lesdits appareils électroniques (12, 13, 14) tandis que ladite unité formant processeur (6; 74) fait fonctionner le programme principal ;
un circuit de secours (14, 15; 58) pour maintenir l'alimentation électrique dans ladite RAM (2 ; 74) pendant au moins une période prédéterminée après avoir coupé l'alimentation électrique du système ;
caractérisé en ce que lesdites données initiales pour initialiser les conditions de fonctionnement desdits appareils électriques (12, 13, 14) maintiennent ledit système dans un état d'arrêt,
ladite ROM (3 ; 75) stockant en outre des premières données (DAO) à lire par l'unité formant processeur (6; 74) tout en faisant fonctionner le programme initial,
ladite RAM (2 ; 74) stockant en outre des secondes données (DAA),
dans lequel le programme initial comprend les cinq étapes suivantes :
une première étape pour initialiser ladite unité formant processeur (6 ; 74),
une deuxième étape suivant ladite première étape, pour extraire lesdites premières et secondes données et ensuite juger la correspondance des premières et secondes données,
une troisième étape suivant ladite deuxième étape, pour faire fonctionner le programme principal lorsque les premières données sont égales aux secondes données, et
une quatrième étape suivant ladite troisième étape, pour changer les données variables pour commander lesdits appareils électroniques (12, 13, 14) dans ladite RAM (2 ; 74) en données initiales dans ladite ROM (3 ; 75) lorsque les premières données ne sont pas égales aux secondes données, et
une cinquième étape suivant ladite quatrième étape, pour changer les secondes données dans ladite RAM (2 ; 74) en premières données dans ladite ROM (3 ; 75), et ensuite faire fonctionner le programme principal.

2. Système selon la revendication 1, caractérisé en ce que ledit système comprend en outre :
un mode d'arrêt pour arrêter partiellement le fonctionnement de ladite unité formant processeur pour ainsi réduire la consommation d'électricité à l'intérieur dudit système, ledit mode d'arrêt étant maintenu de préférence par rapport à une opération de ladite RAM, et
un circuit de détection de tension (16) pour détecter la tension de la source de courant électrique amenée audit système, dans lequel lorsque ledit circuit de détection de tension (16) détecte que la tension de ladite source de courant électrique est inférieure à une valeur prédéterminée, un mode de fonctionnement dudit processeur est changé en un mode d'arrêt, et tandis que ledit mode d'arrêt est maintenu, un signal numérique haut ou bas est appliqué pour remettre à zéro les bornes dudit processeur en utilisant une alimentation électrique à partir dudit circuit de secours (14, 15, 58).
